# EUROPÄISCHE PATENTSCHRIFT

(11) **EP 3 769 604 B1**
(45) Veröffentlichungstag und Bekanntmachung des Hinweises auf die Patenterteilung: **28.06.2023**
(21) Anmeldenummer: 20166694.8
(22) Anmeldetag: 30.03.2020
(51) Int. Cl.: A01D 75/18, A01F 15/08

(54) **LANDWIRTSCHAFTLICHE MASCHINE**
AGRICULTURAL MACHINE
ENGIN AGRICOLE

(30) Priorität: 26.07.2019 DE 102019120217
(43) Veröffentlichungstag der Anmeldung: 27.01.2021
(73) Patentinhaber: PÖTTINGER Landtechnik GmbH, 4710 Grieskirchen (AT)
(72) Erfinder: Prechtl, Wolfgang, 4710 Grieskirchen (AT); Prechtl, Christoph, 4710 Grieskirchen (AT); Schulte, Thorsten, 4710 Grieskirchen (AT); Gadermayr, Andreas, 4710 Grieskirchen (AT); Bumberger, Rainer, 4710 Grieskirchen (AT)
(74) Vertreter: Thoma, Michael

(56) Entgegenhaltungen:
- CN-U- 202 042 032
- DE-A1- 10 238 900
- DE-A1-102007 039 702
- US-A1- 2012 159 916

## Beschreibung

Die vorliegende Erfindung betrifft eine landwirtschaftliche Maschine, insbesondere in Form einer Erntemaschine wie Ballenpresse, mit einer Überwachungsvorrichtung, die zumindest einen Temperatursensor zum Überwachen der Temperatur eines temperaturkritischen Maschinenbauteils aufweist, sowie einer elektronischen Auswerteeinrichtung zum Auswerten des Temperatursignals des Temperatursensors und Bereitstellen eines Warn- und/oder Steuersignals bei Erreichen oder Überschreiten eines kritischen Temperaturzustands.

Bei landwirtschaftlichen Maschinen ist die Temperaturüberwachung bestimmter Maschinenbauteile nicht nur hilfreich, um Überhitzungen und Beschädigungen des jeweiligen Maschinenbauteils oder eines damit verbundenen Anbauteils zu vermeiden, sondern auch von Bedeutung, um eine Brandgefahr zu verhindern. Beispielsweise werden Erntemaschinen wie Ballenpressen, Ladewagen oder Häcksler, die an einen Schlepper angebaut werden können, auf trockenen Feldern eingesetzt oder zum Bearbeiten getrockneten Ernteguts verwendet, so dass sich mit einem stark überhitzten Maschinenbauteil in Berührung kommendes Erntegut wie Stroh oder Heu entzünden kann.

Gleichzeitig kann es durch überhitzende Maschinenbauteile zu einem Ausfall der Maschine und damit zu Totzeiten bzw. auch Verzögerungen in der Bearbeitungskette auf nachgeordneten Verarbeitungsstufen kommen. Fällt beispielsweise ein Schwader aus, kann das Erntegut anschließend auch nicht von einem Ladewagen aufgenommen oder einer Ballenpresse zu Ballen verpresst werden.

Dabei sind es oft nur kleine Maschinenbauteile, die durch Überhitzung verschleißen oder ausfallen oder auch die genannte Brandgefahr mit sich bringen. Insbesondere hitzekritische Bauteile sind beispielsweise die Lager schnell laufender Walzen oder Förderrotoren, wie sie in Ballenpressen zum Formen eines Erntegutballens bzw. der Führung der hierfür verwendeten Riemen Verwendung finden, oder auch in der Aufnahme- und Fördervorrichtung eines Ladewagens oder an dessen Dosierwalzen eingesetzt werden. Temperaturkritisch sind ferner auch Bauteile, an denen hohe Reibung auftritt oder sich Verschmutzungen ansammeln, so dass beispielsweise auch die Presskammerwandungen einer Ballenpresse oder der Förderkanal mit Schneidwerk eines Ladewagens sinnvollerweise hinsichtlich Temperatur überwacht werden kann.

Es wurde daher im Stand der Technik bereits vorgeschlagen, die Wälzlager solcher schnell laufender Walzen bzw. Rotoren von Erntemaschinen hinsichtlich ihrer Temperatur zu überwachen. Beispielsweise beschreibt die Schrift US 2013/0180225 A1 eine Ballenpresse, deren Walzenlager durch Temperatursensoren überwacht werden. Dabei werden einem Maschinenführer die ermittelten Temperaturen auf einem Display angezeigt, so dass dieser ein Überhitzen einzelner Komponenten erkennen kann.

Die Schrift DE 102 38 900 A1 beschreibt eine Presse mit einem durch Gleitleisten verschiebbar geführten Pressenstößel, wobei die Temperatur an den Gleitleisten mittels Temperaturfühlern gemessen wird. Eine elektronische Auswerteeinrichtung wertet die Temperatursignale aus und schaltet die Presse ab, wenn der ermittelte Temperaturgradient einen vorbestimmten Wert überschreitet, um noch vor einer maximalen Soll-Temperatur eine Abschaltung vorzunehmen. Die US 2012/159916 beschreibt ferner einen Rasenmäher, dessen elektrische Antriebsmotoren mittels Temperatursensoren überwacht werden, wobei bei Überschreiten einer vorbestimmten Temperatur über eine vorbestimmte Zeitdauer eine Abschaltung erfolgt. Ähnliche Temperaturüberwachungen zeigen auch die Schriften CN 202 042 032 U und DE 10 2007 039 702 A1.

Die Schrift EP 27 13 701 B1 beschreibt ebenfalls die Temperaturüberwachung der Wälzlager an einer Erntemaschine wie Ballenpresse, wobei darin nicht nur die ermittelten Wälzlagertemperaturen angezeigt, sondern von einer elektronischen Auswerteeinrichtung mit einem jeweiligen Temperaturgrenzwert bzw. einer Referenztemperatur verglichen werden. Übersteigt die gemessene Temperatur die gespeicherte Referenztemperatur, wird einerseits ein Warnsignal angezeigt und andererseits in die Steuerung der Erntemaschine eingegriffen, um die Temperaturbelastung zu ermäßigen. Insbesondere wird dabei die Arbeitsgeschwindigkeit ermäßigt, um die thermische Belastung des überhitzenden Bauteils zu senken.

Solche vorbekannten Temperaturüberwachungen erkennen eine Überhitzung jedoch erst relativ spät bzw. erst dann, wenn die Überhitzung an sich schon da ist. Da überhitzte Maschinenbauteile wie Wälzlager oder Stellaktoren nur recht langsam wieder abkühlen bzw. allgemein thermisch träge reagieren, können Maschinenstillstandszeiten oder zumindest signifikante Leistungseinbußen nur schwer verhindert werden, wenn die Bauteiltemperatur bereits eine kritische Temperatur erreicht hat.

Der vorliegenden Erfindung liegt daher die Aufgabe zugrunde, eine verbesserte landwirtschaftliche Maschine der eingangs genannten Art zu schaffen, die Nachteile des Standes der Technik vermeidet und Letzteren in vorteilhafter Weise weiterbildet. Insbesondere soll eine intelligentere Temperaturüberwachung geschaffen werden, die das Erreichen kritischer Zustände rechtzeitig erkennt und somit Leistungseinbußen oder gar Stillstandszeiten zu vermeiden hilft. Erfindungsgemäß wird die genannte Aufgabe durch eine landwirtschaftliche Maschine gemäß Anspruch 1 gelöst. Bevorzugte Ausgestaltungen der Erfindung sind Gegenstand der abhängigen Ansprüche.

Es wird also vorgeschlagen, die jeweils gemessene Bauteiltemperatur nicht nur auf das Erreichen einer kritischen Höhe hin zu überwachen, sondern auch den zeitlichen Verlauf des Temperatursignals zu bestimmen und auszuwerten. Zeigt das Temperatursignal einen atypischen Verlauf oder einen charakteristischen Trend, kann vorausschauend ein Problem mit dem jeweiligen Maschinenbauteil erkannt werden, bereits bevor die kritische Bauteiltemperatur tatsächlich erreicht wird, so dass rechtzeitig mit Maßnahmen gegengesteuert oder eine Austauschmaßnahme vorbereitet werden kann. Erfindungsgemäß ist die elektronische Auswerteeinrichtung dazu ausgebildet, den zeitlichen Verlauf des Temperatursignals des zumindest einen Temperatursensors zu bestimmen und zumindest hinsichtlich dessen Anstiegsgeschwindigkeit und/oder Anstiegsdauer und/oder hinsichtlich Abweichungen von einem vormaligen, gespeicherten Temperaturverlauf auszuwerten und bei Feststellen einer übermäßigen Anstiegsgeschwindigkeit und/oder Anstiegsdauer und/oder einer übermäßigen Abweichung von dem gespeicherten Temperaturverlauf das genannte Warn- und/oder Steuersignal abzugeben.

Das Warnsignal kann beispielsweise auf einem Bildschirm angezeigt werden und/oder auch akustisch ausgegeben werden. Alternativ oder zusätzlich zu einem Warnsignal kann die Auswerteeinrichtung aber auch ein Steuersignal bereitstellen, welches eine Maschinenfunktion verändert, die auf die Temperaturbelastung des jeweiligen Bauteils Einfluss hat. Beispielsweise kann ein Steuersignal abgegeben werden, welches die Arbeitsgeschwindigkeit reduziert und/oder die Belastung des zu überhitzen drohenden Bauteils reduziert. Erhitzt sich beispielsweise eine Presskammerwandung zu stark, kann eine Nachstellung ausgelöst werden, die den Druck reduziert. Alternativ oder zusätzlich zu einer nur geschwindigkeits- und/oder lastreduzierenden Maßnahme kann das Steuersignal ggf. auch ein Stillsetzen der Maschine auslösen.

Steigt beispielsweise die Temperatur und damit das Temperatursignal des Sensors übermäßig steil und/oder übermäßig lange und/oder zu einem ungewöhnlichen Zeitpunkt an, kann die Auswerteeinrichtung dies als Zeichen für ein aufkommendes Problem werten und hiervor warnen bzw. in die Steuerung der Erntemaschine eingreifen, um die thermische Belastung zu reduzieren. Während es beispielsweise üblich ist, dass die Wälzlagertemperatur eines Rotors ansteigt, wenn ein Bearbeitungszyklus begonnen wird, ist es andererseits eher unüblich, wenn nach bzw. bei einer längeren stationären Betriebsphase ein plötzlicher Temperaturanstieg auftritt. Alternativ oder zusätzlich kann die Auswerteeinheit das genannte Warn- und/oder Steuersignal auch dann abgeben, wenn das Temperatursignal übermäßig lange ansteigt, insbesondere weit über die Anlaufphase eines Betriebszyklus hinaus.

Beispielsweise kann die Steigung bzw. Anstiegsrate des Temperatursignals mit einem Anstiegsgrenzwert verglichen werden, um einen übermäßigen Temperaturanstieg zu identifizieren und ein entsprechendes Warn- und/oder Steuersignal abzusetzen. Die Zeitdauer, über die hinweg die Temperatur ansteigt, kann mit einem oberen Grenzwert und/oder einem unteren Grenzwert verglichen werden, um ein Warn- und/oder Steuersignal auszugeben, wenn die Anstiegsdauer nicht in einem vorbestimmten Fenster liegt.

Um übermäßige Abweichungen von dem genannten zuvor gespeicherten Temperaturverlauf zu identifizieren, kann beispielsweise ein Korridor um den gespeicherten Temperaturverlauf herum vorgegeben werden, um ein Warnsignal und/oder ein Steuersignal abzugeben, wenn der gemessene Temperaturverlauf den vorbestimmten Verlaufskorridor einmal, zweimal oder mehrfach verlässt und/oder über eine vorbestimmte Zeitdauer verlässt.

Der genannte gespeicherte Referenz-Temperaturverlauf, mit dem der gemessene Temperatursignalverlauf abgeglichen wird, kann vorteilhafterweise dynamisch festgelegt werden. Insbesondere kann die Auswerteeinrichtung dazu ausgebildet sein, den gespeicherten Temperaturverlauf in Abhängigkeit eines jeweils gemessenen Temperatursignalverlaufs anzupassen, beispielsweise aus mehreren gemessenen Temperatursignalverläufen einen gemittelten Temperaturverlauf zu bestimmen, der dann einem später neu gemessenen Temperatursignalverlauf als Referenzverlauf dient.

Gemäß der Erfindung wird der von der Auswerteeinrichtung bestimmte zeitliche Verlauf des Temperatursignals auch in Relation zu anderen Maschinenbetriebsparametern ausgewertet. Dabei wird der zeitliche Verlauf des Temperatursignals mit einem zeitlichen Verlauf einer Belastung und/oder einer Arbeitsgeschwindigkeit des temperaturüberwachten Maschinenbauteils verglichen.

Anhand des Vergleichs kann die Auswerteeinrichtung bestimmen, ob der gemessene Temperatursignalverlauf atypische Unregelmäßigkeiten zeigt. Steigt beispielsweise das Temperatursignal an, wenn auch ein Anstieg der Belastung und/oder Arbeitsgeschwindigkeit gleichzeitig oder zeitversetzt erfasst wird, kann die Auswerteeinheit dies als einen normalen, typischen Temperaturanstieg werten, der keine Veranlassung zu einem Warn- und/oder Steuersignal gibt. Alternativ oder zusätzlich kann die Auswerteeinrichtung aber dazu ausgebildet sein, ein Warnund/oder Steuersignal abzugeben, wenn das Temperatursignal einen Anstieg zeigt, obwohl die erfasste Belastung und/oder erfasste Arbeitsgeschwindigkeit des temperaturüberwachten Maschinenbauteils sinkt oder über bereits längere Zeit konstant geblieben ist.

Der Vergleich zwischen zeitlichem Verlauf des Temperatursignals und zeitlichem Verlauf der Arbeitsgeschwindigkeit und/oder der Belastung kann von der Auswerteeinrichtung grundsätzlich auf verschiedene Weise bewerkstelligt oder ausgeführt werden. Beispielsweise kann die Auswerteeinrichtung einen Quotienten aus Temperaturänderung und Arbeitsgeschwindigkeits- und/oder Belastungsänderung (im Sinne von ΔT/Δs + ΔF) bestimmen und auf Veränderungen überwachen.

Zusätzlich kann die Auswerteeinrichtung auch andere Maschinenbetriebsparameter, insbesondere die bereits zurückgelegte Lebensdauer bzw. die abgeleisteten Betriebsstunden berücksichtigen, um die Abgabe eines Warn- und/oder Steuersignals anzupassen. Beispielsweise kann die bereits zurückgelegte Betriebsdauer dazu verwendet werden, die zulässigen Toleranzschwellen für die zuvor erläuterten Abweichungen von einem gespeicherten Referenztemperaturverlauf und/oder für die Steigung und/oder Dauer eines Temperaturanstiegs anzupassen. Mit zunehmender Betriebsdauer wird es wahrscheinlicher, dass ein jeweiliges Maschinenbauteil ausfällt, so dass schon kleinere Abnormalitäten im zeitlichen Verlauf des Temperatursignals als Signal gewertet werden können, dass das Bauteil ausfällt.

Alternativ oder zusätzlich kann die Auswerteeinrichtung auch eine Vorhersage über die noch verbleibende Restlebensdauer treffen. Ein entsprechender Restlebensdauer-Vorhersagebaustein kann die vermutliche Restlebensdauer insbesondere anhand des bestimmten zeitlichen Verlaufs des Temperatursignals berechnen, insbesondere anhand der dabei ermittelten Steigungen und Dauer und zeitliches Auftreten von Temperaturanstiegen und/oder anhand von Abweichungen von einem vorbestimmten, gespeicherten Temperaturverlauf. Beispielsweise kann die verbleibende Restlebensdauer zunehmend kürzer bestimmt werden, wenn die Temperatursignalanstiege steiler und/oder länger und/oder die Abweichungen vom gespeicherten Temperaturverlauf zahlreicher und/oder größer ausfallen.

Vorteilhafterweise kann der genannte Restlebensdauer-Vorhersagebaustein zusätzlich zu den genannten Charakteristika des Temperatursignalverlaufs auch weitere Maschinenbetriebsparameter berücksichtigen und/oder mit dem Temperatursignal und/oder dessen Verlauf verknüpfen. Beispielsweise kann eine bereits abgeleistete Betriebsdauer mit berücksichtigt werden. Alternativ oder zusätzlich kann auch ein funktioneller Zusammenhang zwischen Arbeitsgeschwindigkeit, insbesondere Drehzahl, und/oder Belastung mit dem Temperatursignal und/oder dessen zeitlichem Verlauf für die Bestimmung der Restlebensdauer herangezogen werden. Beispielsweise kann ein Produkt oder ein Quotient aus Arbeitsgeschwindigkeit oder Drehzahl einerseits und Temperatur andererseits für die Bestimmung der Restlebensdauer herangezogen werden. Steigt beispielsweise das Produkt aus Drehzahl und Temperatur übermäßig stark an, kann eine stark verkürzte Restlebensdauer vorhergesagt werden.

Nach einem weiteren Aspekt der vorliegenden Erfindung umfasst die Überwachungsvorrichtung nicht nur einen Temperatursensor, sondern mehrere Temperatursensoren, die verschiedenen temperaturkritischen Maschinenbauteilen zugeordnet sind. Beispielsweise können diversen Lagern wie Wälzlagern verschiedener Arbeitsrotoren und/oder verschiedener Walzen Temperatursensoren zugeordnet sein.

In Weiterbildung der Erfindung können aber auch mehrere Temperatursensoren an Maschinenbauteilen verschiedener Gattung vorgesehen werden. Alternativ oder zusätzlich zu zumindest einem Temperatursensor an einem Wälzlager kann zumindest ein weiterer Temperatursensor an einem Maschinenbauteil mit erhöhter Verschmutzungsneigung und/oder erhöhter Reibung vorgesehen sein, wobei ein solches verschmutzungs- und/oder reibungsbelastetes Maschinenbauteil beispielsweise eine Presskammerwandung oder eine Förderkanalwandung und/oder ein Schneidwerksmesser und/oder Schneidwerksrotor sein kann.

Die genannten mehreren Temperatursensoren sind vorteilhafterweise an eine gemeinsame Auswerteeinrichtung angeschlossen, so dass die Auswerteeinrichtung die Temperatursignale der verschiedenen Temperatursensoren auswerten kann, insbesondere den zeitlichen Verlauf der Temperatursignale in der erläuterten Weise ermitteln und auswerten kann.

Die genannten Sensoren können dabei grundsätzlich in verschiedener Weise an die Auswerteeinrichtung angebunden sein, beispielsweise mittels separater Verbindungsleitungen oder Funkverbindungen. In vorteilhafter Weiterbildung der Erfindung sind die genannten Temperatursensoren an einen BUS angebunden, wobei die BUS-Verbindung zwischen den Sensoren als eine Eindrahtverbindung, aber auch als eine Mehrfachdrahtverbindung aufgebaut sein kann. Vorteilhafterweise können die Sensoren mit der genannten Auswerteeinrichtung und/oder miteinander über den genannten BUS kommunizieren.

Eine solche BUS-Verbindung kann beispielsweise als LIN-BUS bzw. als DS18S20-BUS ausgebildet sein.

Das Vorsehen mehrerer Temperatursensoren ermöglicht eine nochmals intelligentere Temperaturüberwachung, da die Temperatursignale und/oder deren zeitliche Verläufe miteinander abgeglichen und/oder miteinander funktional verknüpft werden können.

Vorteilhafterweise kann die Auswerteeinrichtung beispielsweise dazu ausgebildet sein, die Temperatursignale zweier Temperatursensoren oder mehrerer Temperatursensoren miteinander zu vergleichen, um Temperaturabweichungen und/oder Abweichungen im Temperaturverlauf zu bestimmen und aus ungewöhnlichen Varianzen bzw. Abweichungen auf ein Bauteilproblem zu schließen. Insbesondere können die Temperatursignale von Temperatursensoren, die an sich gleich belastete und/oder mit gleichen Arbeitsgeschwindigkeiten betriebene Maschinenbauteile überwachen, miteinander verglichen werden, um die Temperaturabweichungen zu bestimmen. Geht man davon aus, dass an gleich schnell laufenden und gleich stark belasteten Bauteilen an sich dieselben Temperaturen auftreten müssten, kann aus übermäßigen Temperaturabweichungen und/oder übermäßigen Abweichungen im Temperaturverlauf, insbesondere im Temperaturanstieg darauf geschlossen werden, dass zumindest eines der Bauteile auf einen problematischen Zustand zusteuert.

Insbesondere können die Temperatursignale zweier Temperatursensoren, die zwei Lager desselben Rotors und/oder derselben Walze überwachen, und/oder deren zeitlichen Verläufe in der genannten Weise miteinander abgeglichen werden. Beispielsweise kann ein rechtes und ein linkes Wälzlager einer Umlenkwalze einer Ballenpresse oder eines anderen Arbeitsrotors einer Erntemaschine jeweils durch einen Temperatursensor überwacht werden. Überschreiten auftretende Varianzen eine vorbestimmte Größe, kann die Auswerteeinrichtung ein Warn- und/oder Steuersignal abgeben.

Alternativ oder zusätzlich können die zu verschiedenen Maschinenbauteilen gehörenden Temperatursignale auch dahingehend von der Auswerteeinrichtung verarbeitet werden, dass ein Mittelwert der Temperatursignale und/oder ein mittlerer Verlauf der Temperatursignale bestimmt wird, mit dem die individuellen Temperatursignale verglichen werden, insbesondere hinsichtlich der Höhe der Temperatur und/oder der Steigung eines Temperaturanstiegs und/oder der Dauer eines Temperaturanstiegs und/oder der Größe einer mittleren Abweichung im Temperaturverlauf.

Zeigen beispielsweise neun von zehn Temperatursignalen oder eine andere Anzahl einer Untergruppe von Temperatursignalen nur sehr kleine Abweichungen voneinander und/oder näherungsweise gleich große Abweichungen von einem Mittelwert, kann aus einer deutlich größeren Abweichung eines zehnten Temperatursignals oder eines weiteren Temperatursignals darauf geschlossen werden, dass das Maschinenbauteil, an dem das genannte zehnte oder andere Temperatursignal abgenommen wird, auf einen kritischen Zustand oder sein Lebensdauerende zusteuert.

Die Erfindung wird nachfolgend anhand eines bevorzugten Ausführungsbeispiels und zugehöriger Zeichnungen näher erläutert. In den Zeichnungen zeigen:
- Fig. 1:: eine schematische Seitenansicht einer landwirtschaftlichen Erntemaschine in Form einer Ballenpresse nach einer vorteilhaften Ausführung der Erfindung, wobei die den verschiedenen Walzen und Rotoren bzw. deren Lagern zugeordnete Temperatursensoren dargestellt sind,
- Fig. 2:: eine schematische Darstellung der Anbindung der Temperatursensoren an eine gemeinsame Auswerteeinrichtung über ein BUS-System, das als mehrdrahtiges BUS-System ausgebildet ist,
- Fig. 3:: eine schematische Darstellung der Anbindung der Temperatursensoren an die Auswerteeinrichtung über ein Eindraht-BUS-System,
- Fig. 4:: eine schematische Darstellung des zeitlichen Verlaufs eines Temperatursignals eines der Temperatursensoren, welches den Temperaturverlauf einer defekten Lagerstelle bzw. im Bereich einer auftretenden Verschmutzung wiedergibt.

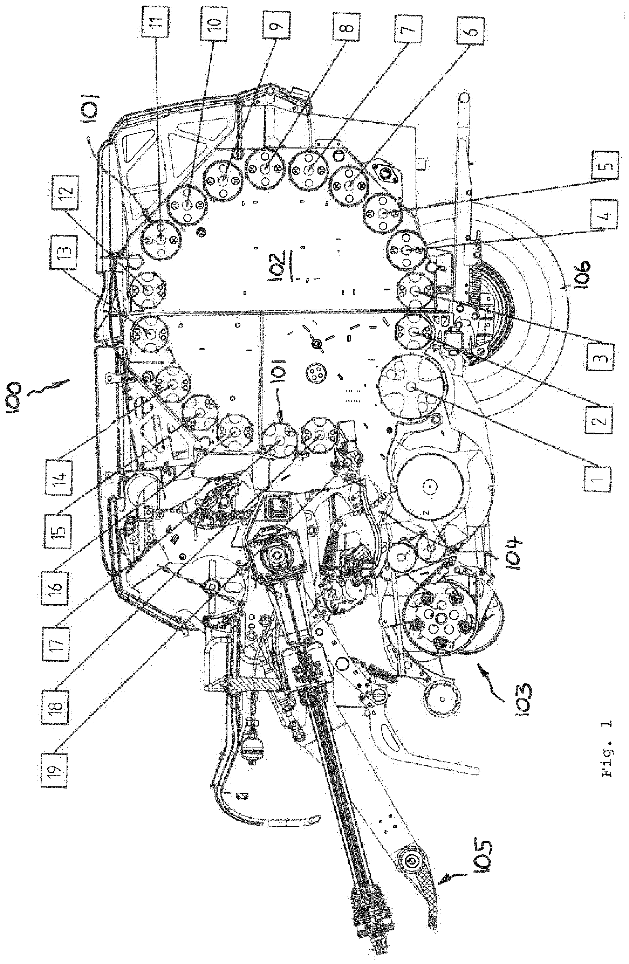

Die Temperaturüberwachung kann beispielsweise auf eine Erntemaschine 100 in Form einer Ballenpresse angewendet werden, wie sie Fig. 1 zeigt. Die genannte Erntemaschine 100 kann diverse Arbeitsrotoren 101 umfassen, die beispielsweise die Umlenk- bzw. Förderwalzen in der Ballenformkammer 102 bilden können. Wie Fig. 1 zeigt, kann auch am Einlauf der Ballenformkammer 102 ein Arbeitsrotor 101 in Form eines Förderrotors vorgesehen sein, wobei die Erntemaschine 100 eine Aufnahmevorrichtung 103 aufweisen kann, um Erntegut vom Boden aufzunehmen. Die Aufnahmevorrichtung 103 kann dabei in an sich bekannter Weise eine Pick-up mit einer rotierenden Stachelwalze und einen daran anschließenden Förderrotor aufweisen, um das aufgenommene Erntegut in die Ballenformkammer 102 oder im Falle eines Ladewagens in dessen Laderaum zu fördern. Dabei kann ein Schneidwerk mit Schneidmessern 104 das Erntegut beim Durchfördern durch den Förderkanal zerschneiden, vgl. Fig. 1.

Wie Fig. 1 zeigt, kann die Erntemaschine 100 generell als Anbaugerät ausgebildet sein, welches über eine Anbauvorrichtung 105 beispielsweise in Form einer Deichsel an einen nicht dargestellten Schlepper angebaut werden kann. Unabhängig hiervon kann die Erntemaschine 100 verfahrbar ausgebildet sein und sich durch ein Fahrwerk 106 auf dem Boden abstützen.

Wie Fig. 1 zeigt, können den Arbeitsrotoren 101 der Erntemaschine 100 bzw. den Wälzlagern, mit denen die genannten Arbeitsrotoren 101 drehbar gelagert sind, Temperatursensoren 1-19 zugeordnet sein, um die Temperatur der jeweiligen Lager der Arbeitsrotoren 101 zu erfassen.

Die genannten Temperatursensoren 1-19 können als Analogsensoren ausgebildet sein, die ein analoges Temperatursignal bereitstellen, oder alternativ auch digital arbeiten und ein digitales Temperatursignal bereitstellen.

Vorteilhafterweise können die genannten Temperatursensoren 1-19 durch einen BUS 20 miteinander verbunden und/oder an eine Auswerteeinrichtung 21 angeschlossen sein, um miteinander und/oder mit der genannten Auswerteeinrichtung 21 kommunizieren zu können.

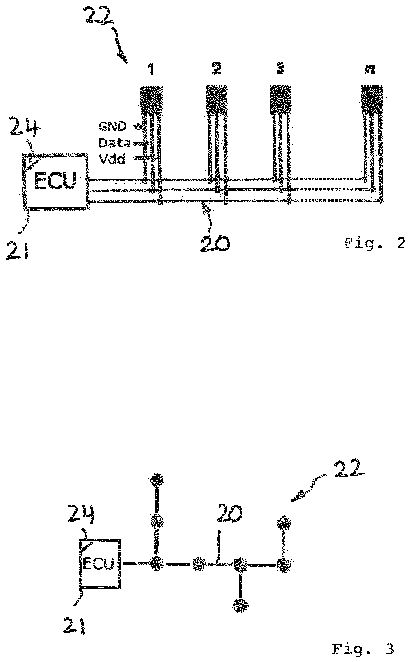

Die genannte BUS-Verbindung kann als Eindrahtverbindung, aber auch in Form einer Mehrdrahtverbindung aufgebaut sein, vgl. Fig. 2 und Fig. 3. Durch die genannte BUS-Verbindung 20 werden der Auswerteeinrichtung 21 alle Temperatursignale aller Temperatursensoren 1-19 zur Auswertung bereitgestellt. Zudem können die Temperatursensoren 1-19 auch untereinander kommunizieren, um beispielsweise an einem gut sichtbaren Temperatursensor ein Warnsignal abzugeben, wenn an einem anderen Temperatursensor ein zu hohes Temperaturniveau gemessen wird. Die Temperatursensoren 1-19 bzw. einige oder alle hiervon können hierzu mit einer Anzeigevorrichtung versehen sein, beispielsweise einer LED oder auch einem Display, je nach Ausbildung des Sensors.

Die genannte Auswerteeinrichtung 21 kann in Form einer elektronische Rechnereinrichtung ausgebildet sein, die einen Mikroprozessor, einen Programmspeicher und/oder einen Datenspeicher aufweisen kann, um ein Auswerteprogramm zum Auswerten der Temperatursignale abzuarbeiten und ein Warn- und/oder Steuersignal auszugeben, wenn sich eines der temperaturüberwachten Maschinenbauteile einer kritischen Temperatur annähert oder ein auffälliges Verhalten im Temperaturverlauf zeigt.

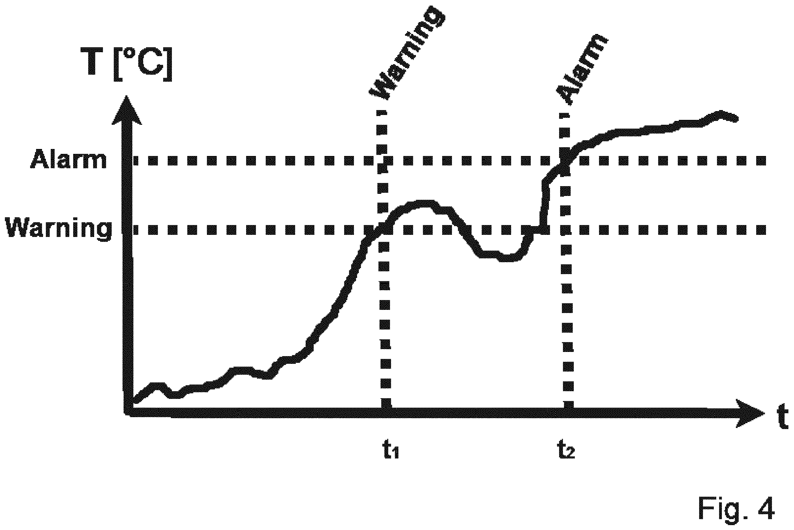

Wie Fig. 4 zeigt, können sich im Verlauf des Temperatursignals eines oder mehrerer der Temperatursensoren 1-19 Auffälligkeiten ergeben, wenn das überwachte Bauteil, beispielsweise ein Wälzlager übermäßigen Verschleiß oder eine Beschädigung erfährt, oder sich beispielsweise durch Verschmutzung eine verstärkte Reibung ergibt.

Wie Fig. 4 zeigt, kann beispielsweise in einer ersten Arbeitsbetriebsphase t₁ das Temperatursignal einen näherungsweise kontinuierlichen, flachen Anstieg zeigen, der signalisiert, dass die Temperatur des überwachten Bauteils entsprechend leicht, näherungsweise kontinuierlich ansteigt. Zum Zeitpunkt t₁ zeigt das Temperatursignal jedoch eine auffällige, steile Anstiegsrate. In relativ kurzer Zeit steigt das Temperatursignal stark an.

Die Auswerteeinrichtung 21, die den starken Temperaturanstieg im Bereich des Zeitpunkts t₁ erkennt, kann ein erstes Warnsignal abgeben.

In der nach dem Zeitpunkt t₁ folgenden Betriebsphase fällt die Temperatur wieder leicht ab, beispielsweise weil sich eine Verschmutzung und die dadurch hervorgerufene Reibung wieder abfällt oder weil ein Lager wieder ausreichend Schmierstoff erhalten hat.

Zum Zeitpunkt t₂ zeigt das Temperatursignal jedoch erneut einen steilen und betragsmäßig relativ großen Anstieg, der von der Auswerteeinrichtung 21 ermittelt wird, woraufhin die Auswerteeinrichtung 21 ein Alarmsignal ausgeben kann.

Die genannte Auswerteeinrichtung 21 kann darüber hinaus auch in der eingangs näher erläuterten Weise die Temperatursignale der verschiedenen Temperatursensoren 1-19 miteinander verknüpfen bzw. miteinander vergleichen und bei auffälligen Varianzen entsprechende Warn- und/oder Steuersignale abgeben. Ebenso kann die Auswerteeinrichtung 21 die gemessenen Temperatursignale auch mit weiteren Betriebsparametern der Erntemaschine 100 verknüpfen bzw. damit abgleichen, insbesondere mit einer Arbeitsgeschwindigkeit und/oder einer Belastung des jeweils temperaturüberwachten Maschinenbauteils oder einer anderen Maschinenkomponente, deren Arbeitsgeschwindigkeit und/oder Belastung die Temperaturentwicklung des überwachten Bauteils beeinflusst.

Weiterhin alternativ oder zusätzlich kann die Auswerteeinrichtung 21 auch die Betriebsstunden bzw. die abgeleistete Arbeitszeit mit berücksichtigen, wenn die Temperatursignale ausgewertet werden, wie dies eingangs näher erläutert wurde. Insbesondere kann die Auswerteeinrichtung 21 auch eine verbleibende Restlebensdauer vorhersagen und hierfür die Temperatursignale der das jeweilige Bauteil überwachenden Sensoren heranziehen.

## Patentansprüche

1. Landwirtschaftliche Maschine, insbesondere Erntemaschine wie Ballenpresse, mit einer Überwachungsvorrichtung (22), die zumindest einen Temperatursensor (1-19) zum Überwachen der Temperatur einer temperaturkritischen Maschinenbauteils (101) aufweist, sowie einer elektronischen Auswerteeinrichtung (21) zum Auswerten des Temperatursignals des Temperatursensors und Bereitstellen eines Warnund/oder Steuersignals bei Erreichen oder Überschreiten eines kritischen Temperaturzustands, wobei die elektronische Auswerteeinrichtung (21) dazu ausgebildet ist, einen zeitlichen Verlauf des Temperatursignals (23) des zumindest einen Temperatursensors (1-19) zu bestimmen und zumindest hinsichtlich dessen Anstiegsgeschwindigkeit und/oder Anstiegsdauer und/oder hinsichtlich Abweichungen von einem vormaligen, gespeicherten Temperaturverlauf auszuwerten und bei Feststellen einer übermäßigen Anstiegsgeschwindigkeit und/oder übermäßigen Anstiegsdauer und/oder übermäßigen Abweichung von dem gespeicherten Temperaturverlauf das genannte Warn- und/oder Steuersignal abzugeben, **dadurch gekennzeichnet, dass** die elektronische Auswerteeinrichtung (21) dazu ausgebildet ist, den zeitlichen Verlauf des gemessenen Temperatursignals mit dem zeitlichen Verlauf einer erfassten Arbeitsgeschwindigkeit und/oder einer erfassten Belastung des temperaturüberwachten Maschinenbauteils zu vergleichen und das Warn- und/oder Steuersignal bei übermäßigen Abweichungen des Temperatursignalverlaufs vom Arbeitsgeschwindigkeitsund/oder Belastungsverlauf abzugeben.

2. Landwirtschaftliche Maschine nach dem vorhergehenden Anspruch, wobei die Auswerteeinrichtung (21) dazu ausgebildet ist, den gespeicherten Temperatursignalverlauf, mit dem ein jeweils aktueller Temperatursignalverlauf verglichen wird, und/oder einen zulässigen Abweichungskorridor hiervon in Abhängigkeit des aktuell gemessenen Temperatursignalverlaufs anzupassen dann, wenn der aktuell gemessene Temperatursignalverlauf als unauffällig ausgewertet wurde.

3. Landwirtschaftliche Maschine nach einem der vorhergehenden Ansprüche, wobei die Auswerteeinrichtung (21) dazu ausgebildet ist, einen Quotienten aus Temperatursignal und Arbeitsgeschwindigkeit und/oder Belastung zu bilden und das Warn- und/oder Steuersignal abzugeben, wenn der Quotient einen vorbestimmten Grenzwert überschreitet.

4. Landwirtschaftliche Maschine nach einem der vorhergehenden Ansprüche, wobei die Auswerteeinrichtung (21) dazu ausgebildet ist, bei der Abgabe des Warn- und/oder Steuersignals zusätzlich zu dem Temperatursignal auch ein Arbeitszeitsignal, das die von der landwirtschaftlichen Maschine abgeleisteten Betriebsstunden angibt, zu berücksichtigen.

5. Landwirtschaftliche Maschine nach dem vorhergehenden Anspruch, wobei die Auswerteeinrichtung (21) dazu ausgebildet ist, eine zulässige Toleranzschwelle für die Anstiegsgeschwindigkeit und/oder die Anstiegsdauer und/oder die Abweichung des Temperatursignals vom gespeicherten Temperatursignalverlauf in Abhängigkeit des Betriebszeitsignals anzupassen.

6. Landwirtschaftliche Maschine nach einem der vorhergehenden Ansprüche, wobei die Auswerteeinrichtung (21) einen Restlebensdauer-Vorhersagebaustein (24) zum Vorhersagen einer verbleibenden Restlebensdauer in Abhängigkeit des zeitlichen Verlaufs des Temperatursignals des zumindest einen Temperatursensors (1-19) aufweist.

7. Landwirtschaftliche Maschine nach dem vorhergehenden Anspruch, wobei der Restlebensdauer-Vorhersagebaustein (24) dazu ausgebildet ist, für die Vorhersage der Restlebensdauer zusätzlich zu dem zeitlichen Verlauf des Temperatursignals auch ein Arbeitszeitsignal, das die von der landwirtschaftlichen Maschine abgeleisteten Betriebsstunden angibt, zu berücksichtigen.

8. Landwirtschaftliche Maschine nach einem der vorhergehenden Ansprüche, wobei eine Mehrzahl von Temperatursensoren (1-19) vorgesehen sind, deren Temperatursignale von der Auswerteeinrichtung (21) auswertbar sind, wobei die genannte Auswerteeinrichtung (21) dazu ausgebildet ist, die Temperatursignale verschiedener Temperatursensoren (1-19) miteinander zu vergleichen und bei übermäßigem Abweichen der Temperatursignale voneinander das genannte Warn- und/oder Steuersignal abzugeben.

9. Landwirtschaftliche Maschine nach dem vorhergehenden Anspruch, wobei die Temperatursensoren (1-19) durch einen BUS (20) miteinander und mit der Auswerteeinrichtung (21) verbunden sind.

10. Landwirtschaftliche Maschine nach einem der vorhergehenden Ansprüche, wobei das Steuersignal, das von der Auswerteeinrichtung (21) bereitstellbar ist, ein arbeitsgeschwindigkeits- und/oder belastungsreduzierendes Steuersignal ist.

## Claims

1. Agricultural machine, in particular a harvester such as a baler, having a monitoring device (22), which has at least one temperature sensor (1-19) for monitoring the temperature of a temperature-critical machine component (101), and an electronic evaluation device (21) for evaluating the temperature signal of the temperature sensor and providing a warning and/or control signal when reaching or exceeding a critical temperature state, wherein the electronic evaluation device (21) is designed to determine a temporal sequence of the temperature signal (23) of the at least one temperature sensor (1-19) and to evaluate it at least with regard to its rate of rise and/or duration of rise and/or with regard to deviations from a previously stored temperature curve and, if an excessive rate of rise and/or excessive duration of rise and/or excessive deviation from the stored temperature curve is detected, to emit the said warning and/or control signal, **characterised in that** the electronic evaluation device (21) is designed to compare the temporal sequence of the measured temperature signal with the temporal sequence of a detected operating speed and/or a detected load of the temperature-monitored machine component and to emit the warning and/or control signal in the event of excessive deviations of the temperature signal sequence from the operating speed and/or load sequence.

2. Agricultural machine according to the preceding claim, wherein the evaluation device (21) is designed to adjust the stored temperature signal curve, with which a respective current temperature signal curve is compared, and/or a permissible deviation corridor thereof depending on the currently measured temperature signal curve, if the currently measured temperature signal curve has been evaluated as inconspicuous.

3. Agricultural machine according to any one of the preceding claims, wherein the evaluation device (21) is designed to form a quotient from the temperature signal and the operating speed and/or load, and to emit the warning and/or control signal if the quotient exceeds a predetermined threshold value.

4. Agricultural machine according to any one of the preceding claims, wherein the evaluation device (21) is designed to take into account, in addition to the temperature signal, an operating time signal indicating the operating hours completed by the agricultural machine when emitting the warning and/or control signal.

5. Agricultural machine according to any one of the preceding claims, wherein the evaluation device (21) is designed to adapt a permissible tolerance threshold for the rate of rise and/or the duration of rise and/or the deviation of the temperature signal from the stored temperature signal value depending on the operating time signal.

6. Agricultural machine according to any one of the preceding claims, wherein the evaluation device (21) has a remaining service life prediction module (24) for predicting a remaining service life depending on the temporal sequence of the temperature signal of the at least one temperature sensor (1-19).

7. Agricultural machine according to the preceding claim, wherein the remaining service life prediction module (24) is designed to take into account, for the predicting the remaining service life, in addition to the temporal course of the temperature signal, also a working time signal which indicates the operating hours worked by the agricultural machine.

8. Agricultural machine according to any one of the preceding claims, wherein a plurality of temperature sensors (1-19) is provided, the temperature signals of which can be evaluated by the evaluation device (21), wherein said evaluation device (21) is designed to compare the temperature signals of different temperature sensors (1-19) with one another and in the event of excessive deviations of the temperature signals from one another to emit said warning and/or control signal.

9. Agricultural machine according to any one of the preceding claims, wherein the temperature sensors (1-19) are connected to one another and to the evaluation device (21) by means of a BUS (20).

10. Agricultural machine according to any one of the preceding claims, wherein the control signal that can be provided by the evaluation device (21) is an operating speed and/or load-reducing control signal.

## Revendications

1. Machine agricole, notamment machine de récolte telle que presse à balles, avec un dispositif de surveillance (22) qui présente au moins un capteur de température (1-19) pour surveiller la température d'un composant de machine (101) critique du point de vue de la température, ainsi qu'un appareil d'évaluation électronique (21) pour évaluer le signal de température du capteur de température et fournir un signal d'avertissement et/ou de commande lorsqu'un état de température critique est atteint ou dépassé, l'appareil d'évaluation électronique (21) étant configuré pour déterminer une courbe temporelle du signal de température (23) de l'au moins un capteur de température (1-19) et pour l'évaluer au moins au regard de sa vitesse d'augmentation et/ou de sa durée d'augmentation et/ou au regard de déviations par rapport à une courbe de température précédente enregistrée, et, en cas de constatation d'une vitesse d'augmentation excessive et/ou d'une durée d'augmentation excessive et/ou d'une déviation excessive par rapport à la courbe de température enregistrée, pour émettre ledit signal d'avertissement et/ou de commande, **caractérisé en ce que** l'appareil d'évaluation électronique (21) est configuré pour comparer la courbe temporelle du signal de température mesuré à la courbe temporelle d'une vitesse de travail détectée et/ou d'une charge détectée du composant de machine dont la température est surveillée et pour émettre le signal d'avertissement et/ou de commande en cas de déviations excessives de la courbe de signal de température par rapport à la courbe de vitesse de travail et/ou de charge.

2. Machine agricole selon la revendication précédente, dans laquelle l'appareil d'évaluation (21) est configuré pour adapter la courbe de signal de température enregistrée, à laquelle une courbe de signal de température actuelle est comparée, et/ou un corridor de déviation admissible de celle-ci en fonction de la courbe de signal de température actuellement mesurée lorsque la courbe de signal de température actuellement mesurée a été évaluée comme étant sans particularité.

3. Machine agricole selon l'une quelconque des revendications précédentes, dans laquelle l'appareil d'évaluation (21) est configuré pour former un quotient du signal de température et de la vitesse de travail et/ou de la charge et pour émettre le signal d'avertissement et/ou de commande lorsque le quotient dépasse une valeur limite prédéterminée.

4. Machine agricole selon l'une quelconque des revendications précédentes, dans laquelle l'appareil d'évaluation (21) est configuré pour prendre en considération, lors de l'émission du signal d'avertissement et/ou de commande, en plus du signal de température, un signal de temps de travail qui indique les heures de fonctionnement effectuées par la machine agricole.

5. Machine agricole selon la revendication précédente, dans laquelle l'appareil d'évaluation (21) est configuré pour adapter un seuil de tolérance admissible pour la vitesse d'augmentation et/ou la durée d'augmentation et/ou la déviation du signal de température par rapport à la courbe de signal de température enregistrée en fonction du signal de temps de fonctionnement.

6. Machine agricole selon l'une quelconque des revendications précédentes, dans laquelle l'appareil d'exploitation (21) présente un module de prédiction de durée de vie restante (24) pour prédire une durée de vie restante en fonction de la courbe temporelle du signal de température de l'au moins un capteur de température (1-19).

7. Machine agricole selon la revendication précédente, dans laquelle le module de prédiction de durée de vie restante (24) est configuré pour prendre en considération, pour la prédiction de la durée de vie restante, en plus de la courbe temporelle du signal de température, un signal de temps de travail indiquant les heures de fonctionnement effectuées par la machine agricole.

8. Machine agricole selon l'une quelconque des revendications précédentes, dans laquelle une pluralité de capteurs de température (1-19) sont prévus, dont les signaux de température peuvent être évalués par l'appareil d'évaluation (21), ledit appareil d'évaluation (21) étant configuré pour comparer entre eux les signaux de température de différents capteurs de température (1-19) et pour émettre ledit signal d'avertissement et/ou de commande en cas de déviation excessive des signaux de température entre eux.

9. Machine agricole selon la revendication précédente, dans laquelle les capteurs de température (1-19) sont reliées entre eux et à l'appareil d'évaluation (21) par un BUS (20).

10. Machine agricole selon l'une quelconque des revendications précédentes, dans laquelle le signal de commande qui peut être fourni par l'appareil d'évaluation (21) est un signal de commande de réduction de la vitesse de travail et/ou de la charge.
